# EUROPÄISCHE PATENTSCHRIFT

(11) **EP 0 983 174 B1**
(45) Veröffentlichungstag und Bekanntmachung des Hinweises auf die Patenterteilung: **18.09.2002**
(21) Anmeldenummer: 98929331.1
(22) Anmeldetag: 18.05.1998
(51) Int. Cl.: B60T 8/34, F16K 15/18

(54) **HYDRAULISCHE FAHRZEUGBREMSANLAGE MIT RADSCHLUPFREGELUNG SOWIE VENTIL FÜR EINE SOLCHE BREMSANLAGE**
HYDRAULIC VEHICLE BRAKING SYSTEM WITH WHEEL SLIP CONTROL, AND A VALVE FOR A BRAKING SYSTEM OF THIS TYPE
SYSTEME DE FREINAGE HYDRAULIQUE POUR VEHICULE A REGULATION ANTIPATINAGE ET SOUPAPE APPROPRIEE POUR SYSTEME DE FREINAGE DE CE TYPE

(30) Priorität: 24.05.1997 DE 19721774
(43) Veröffentlichungstag der Anmeldung: 08.03.2000
(73) Patentinhaber: Continental Teves AG & Co. oHG, 60488 Frankfurt am Main (DE)
(72) Erfinder: BURGDORF, Jochen, D-63075 Offenbach (DE); VOLZ, Peter, D-64291 Darmstadt (DE)
(86) Internationale Anmeldenummer: EP9802906
(87) Internationale Veröffentlichungsnummer: WO98052801

(56) Entgegenhaltungen:
- DE-A- 1 931 984
- DE-A- 3 532 933
- DE-A- 4 337 133
- DE-A- 19 632 158
- DE-A- 19 632 343
- US-A- 5 299 598
- US-A- 5 605 384

## Beschreibung

Die Erfindung bezieht sich auf eine hydraulische Fahrzeugbremsanlage mit Radschlupfregelung.

Eine gattungsgemäße hydraulische Bremsanlage mit einem Primärkreis und einem Sekundärkreis ist in der DE 43 37 133 A1 beschrieben. Unter einem Primärkreis sollen die Verbindungsleitungen und Kanäle verstanden werden, die den Hauptbremszylinder der Bremsanlage mit den Radbremsen verbinden und die bei einer normalen Bremsbetätigung von der Bremsflüssigkeit in Richtung zu den Radbremsen durchströmt werden. Unter dem Sekundärkreis sollen diejenigen Verbindungsleitungen und Kanäle verstanden werden, die im Fall einer Radschlupfregelung von Druckmitteln durchströmt werden.

Der Sekundärkreis ist eingangsseitig über ein Auslaßventil und ausgangsseitig über eine sogenannte Rückförderpumpe mit dem Primärkreis verbunden. Die Bremsanlage wird mit einer üblichen Bremsflüssigkeit als Druckmittel gefüllt. Die Befüllung erfolgt gegen Ende der Fahrzeugmontage am Montageband, also erst nachdem die Bremsanlage trocken ins Fahrzeug eingebaut worden ist. Dazu hat sich die folgende schnell und unproblematisch durchzuführende Vorgehensweise bewährt: Zunächst wird die gesamte Anlage evakuiert und dann im evakuierten Zustand mit einem Bremsflüssigkeitstank verbunden, wodurch die Bremsflüssigkeit in die Bremsanlage einströmt und zunächst den Primärkreis füllt. Damit auch der Sekundärkreis mit Druckmittel gefüllt wird, wird bei dieser Prozedur, d.h. sowohl beim Evakuieren als auch beim Befüllen, das elektromagnetisch betätigbare Auslaßventil geöffnet. Dies ist insofern nachteilig, da an der Füllstation eine Möglichkeit vorgesehen werden muß, das normalerweise geschlossene Auslaßventil in die Offenstellung zu schalten.

In der DE 43 37 133 A1 wird daher vorgeschlagen, zwischen dem Sekundärkreis und dem Primärkreis ein Rückschlagventil zu schalten, das zum Primärkreis hin öffnet. Beim Evakuieren der Anlage öffnet dieses Ventil, so daß beide Kreise evakuiert werden. Wenn, wie im ersten Ausführungsbeispiel der Offenlegungschrift vorgestellt, der Ventilschließkörper nicht von einer Feder in Schließrichtung belastet ist, bleibt das Ventil am Ende des Evakuierungsvorganges offen, so daß beim Füllvorgang sowohl der Primärkreis als auch der Sekundärkreis mit Druckmittel gefüllt wird. In einem zweiten Ausführungsbeispiel wird als vorteilhaft herausgestellt, daß das Rückschlagventil nach dem Evakuierungsvorgang schließt. Dies sollte nach dem Vorschlag dadurch realisiert werden, daß der Ventilschließkörper über dem Ventilsitz angeordnet ist und von der Schwerkraft auf den Ventilsitz gedrückt wird. Bei einer auf einem Prüfstand induzierten Radschlupfregelung, bei der das Auslaßventil geöffnet und die Rückförderpumpe eingeschaltet wird, strömt Bremsflüssigkeit in den Sekundärkreis.

Der Vorschlag nach der DE 43 37 133 A1 gewährleistet eine rasche und einfache Befüllbarkeit der Bremsanlage mit Bremsflüssigkeit bei der Fahrzeugmontage. Der zusätzliche Einbau eines Rückschlagventils zwischen dem Sekundärkreis und dem Primärkreis hat aber auch einige Nachteile. Es muß nämlich dafür gesorgt werden, daß das Ventil in der Schließstellung absolut dicht ist.

Eine Dichtungspaarung Metall/Metall für Ventilsitz/Ventilschließkörper ist dafür ungeeignet, da sich Verunreinigungen oder Späne zwischen Ventilsitz und Ventilschließkörper setzen können, die verhindern, daß das Ventil vollständig schließt. In einer früheren Anmeldung gemäß DE 196 323 43 A1 wurde daher schon vorgeschlagen, zumindest die Dichtlippe des Ventilschließkörpers aus relativ weichem Kunststoff zu fertigen, welche die in der Bremsflüssigkeit vorhandenen Verunreinigungen aufnimmt und einlagert, so daß gewährleistet ist, daß das Rückschlagventil sicher schließt. Außerdem wurde vorgeschlagen, den Ventilschließkörper mit einer schwachen Feder zu belasten, so daß - ähnlich wie im zweiten Vorschlag der DE 43 37 133 A1 - beim Evakuierungsvorgang beide Kreise evakuiert werden und beim Füllvorgang zunächst nur der Primärkreis mit Bremsflüssigkeit gefüllt wird, während der Sekundärkreis bei einer induzierten Radschlupfregelung durch Öffnen des Auslaßventils gefüllt wird. Aber auch diese Lösung ist nicht frei von Problemen, insbesondere in den Fällen, in denen der Sekundärkreis von einem Kanal in einem sogenannten Ventilblock aus Stahl oder Aluminium gebildet wird: Bei einer Bremsbetätigung, bei der im Primärkreis ein Druck aufgebaut wird, lastet dieser auf dem Ventilschließkörper, der unter Zusammendrückung seiner elastisch nachgiebigen Dichtlippe in Richtung auf den Sekundärkreis verschoben wird. Dabei wird das Volumen, das dem Druckmittel im Sekundärkreis zur Verfügung gestellt wird, verkleinert, wodurch ein entsprechender Teil der Bremsflüssigkeit an der Dichtlippe vorbei in den Primärkreis verdrängt wird. Nach Lösen der Bremsen, also nachdem sich der Druck im Primärkreis wieder abgebaut hat, wird der Ventilschließkörper unter der elastischen Wirkung seiner Dichtlippe wieder zurückgeschoben, wodurch der dem Druckmittel zur Verfügung stehende Raum im Sekundärkreis wieder vergrößert wird mit der Folge, daß sich dort ein nicht gewünschter Unterdruck ausbildet. Eine Möglichkeit dem Problem zu begegnen, bestünde darin, die Vorspannung der Ventilfeder zu erhöhen, was aber wiederum zur Folge hätte, daß der Sekundärkreis nicht vollständig evakuiert werden kann, was wiederum eine besondere Füllungsprozedur notwendig machen würde.

In der DE 196 321 58 A1 wurde schließlich vorgeschlagen, in der Evakuierungsverbindung zwischen Primär- und Sekundärkreis statt eines Rückschlagventils einen federlosen Schließkörper aus einem quellfähigen Synthese-Kautschuk vorzusehen. Der Schließkörper soll nach erfolgter Evakuierung und Befüllung der Bremsanlage unter der Einwirkung von Bremsflüssigkeit aufquellen und auf diese Weise die Evakuierungsverbindung unterbrechen. Die vorgeschlagene Lösung der vorgenannten Probleme ist jedoch mit einem gewissen Sicherheitsrisiko behaftet. Dieses besteht darin, daß der aufgequollene und bis zu einem gewissen Grad dauerelastische Schließkörper sowohl zum Primärkreis als auch zum Sekundärkreis hin unmittelbar exponiert und dadurch fortwährend deformierenden Kräften ausgesetzt ist, welche durch die im Betrieb der Bremsanlage rasch und alternierend auftretenden Druckdifferenzen zwischen Primär- und Sekundärkreis verursacht werden. Begünstigt durch hohe Temperaturen können die auftretenden Deformationskräfte zu einem viskosen Fließverhalten des Schließkörpers und auf diese Weise zu leckagebedingten Fehlfunktionen der gesamten Bremsanlage führen.

Die Erfindung beruht somit auf der Aufgabe, eine Fahrzeugbremsanlage mit Radschlupfregelung der angegebenen Art so zu gestalten, daß die oben angegebenen Probleme vermieden werden.

Diese Aufgabe wird für eine Bremsanlage der angegebenen Art erfindungsgemäß durch die den Patentanspruch 1 kennzeichnenden Merkmale gelöst.

Ein wesentlicher Vorteil des erfindungsgemäßen Ventils besteht darin, daß zum Zwecke der Evakuierung der Bremsanlage eine schwache Ventilbefederung gewählt werden kann und auf diese Weise auch der Sekundärkreis zuverlässig evakuierbar ist. Ein für eine sichere Evakuierung geeigneter "Trocken"-Öffnungsdruck kann beispielsweise um 50 mbar betragen. Da die Zusatzeinrichtung den Öffnungsdruck für den federbeaufschlagten Schließkörper nach Befüllung der Bremsanlage mit Bremsflüssigkeit selbsttätig ansteigen läßt, sind Vakuumeinlagerungen bzw. Unterdrücke im Sekundärkreis ausgeschlossen. Dabei ist jedoch die ursprüngliche Federbeaufschlagung des Ventils nach wie vor vorhanden, so daß auch im Falle einer Fehlfunktion oder eines Versagens der Zusatzeinrichtung wenigstens der initiale Öffnungsdruck und damit noch eine eingeschränkte Funktionsfähigkeit der Bremsanlage zur Verfügung steht.

Weitere Merkmale und Vorzüge der Erfindung gehen nachfolgend aus der Beschreibung mehrerer in der Zeichnung wiedergegebener Ausführungsbeispiele hervor.

Es zeigen:
- Fig. 1:: einen Hydraulikschaltplan für eine Kraftfahrzeugbremsanlage mit Radschlupfregelung mit einer prinzipiellen Darstellung des erfindungsgemäßen Ventils;
- Fig. 2:: eine Ausführungsform des erfindungsgemäßen Ventils
vor der Evakuierung (Fig. 2a),
während der Evakuierung (Fig. 2b),
nach der Befüllung (Fig. 2c);
- Fig. 3:: eine andere Ausführungsform des erfindungsgemäßen Ventils
vor der Evakuierung (Fig. 3a),
während der Evakuierung (Fig. 3b),
nach der Befüllung (Fig. 3c);
- Fig. 4:: eine weitere Ausführungsform des erfindungsgemäßen Ventils
vor der Evakuierung (Fig. 4a),
während der Evakuierung (Fig. 4b),
nach der Befüllung (Fig. 4c).

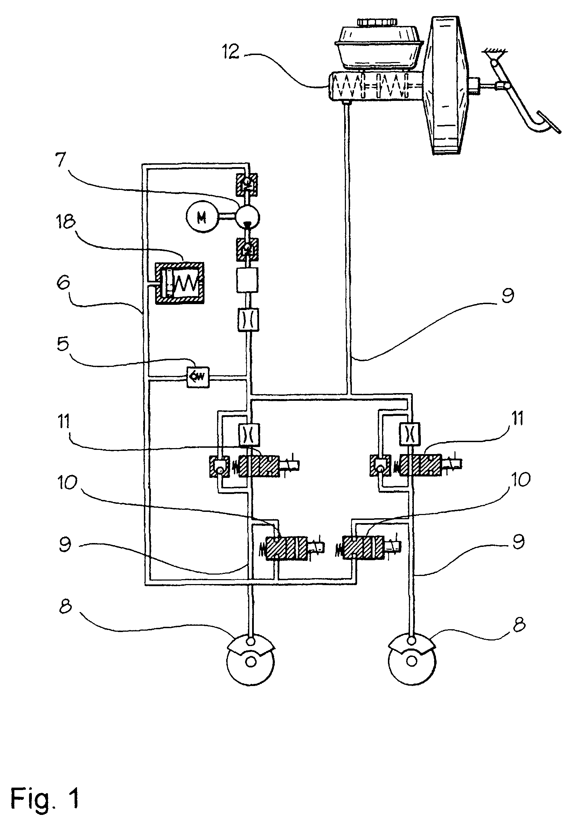

Die Figur 1 zeigt den Hydraulikschaltplan für eine hydraulische Kraftfahrzeugbremsanlage mit Radschlupfregelung, die nach dem Rückförderprinzip arbeitet.

Ein an einem Bremsdruckgeber 12 angeschlossener Bremsdruckpfad 9 verzweigt sich auf zwei Radbremsen 8, wobei in die Abzweigungen des Bremsdruckpfades 9 in der Grundstellung elektromagnetisch nicht erregte, offene Einlaßventile 11 eingesetzt sind. Dieser hydraulische Abschnitt der Bremsanlage soll im nachfolgenden mit dem Begriff Primärkreis umschrieben werden. Zwischen den in der Grundstellung geöffneten Einlaßventilen 11 und den Radbremsen 8 sind an den Bremsdruckpfaden 9 in der Grundstellung geschlossene Auslaßventile 10 angeordnet, die mit einem Saugpfad 6 einer Pumpe 7 in Verbindung stehen. Am Saugpfad 6 schließt sich eine mit dem Bremsdruckpfad 9 verbundene Bypassleitung an, die ein Ventil 5 aufnimmt, das weiter unten näher erläutert werden soll. Der Ventilschließkörper 1 des als Rückschlagventil 5 ausgebildeten Ventils ist in Sperrrichtung von einer Ventilfeder 4 beaufschlagt, so daß das Rückschlagventil 5 eine hydraulische Verbindung ausschließlich vom Saugpfad 6 zum Bremsdruckpfad 9 ermöglicht. Zwischen dem Anschluß des Rückschlagventils 5 an den Saugpfad 6 und der Pumpe 7 befindet sich im Nebenschluß ein Niederdruckspeicher 18. Der von den in der Grundstellung geschlossenen Auslaßventile 10 zur Pumpe 7 führende Hydraulikabschnitt wird im nachfolgenden mit dem Begriff Sekundärkreis beschrieben. Die Pumpe 7 ist sowohl mit einem schematisch skizzierten Saug- als auch Druckventil versehen und steht über eine nachgeschaltete Geräuschdämpfungseinrichtung mit dem Bremsdruckpfad 9 in Verbindung.

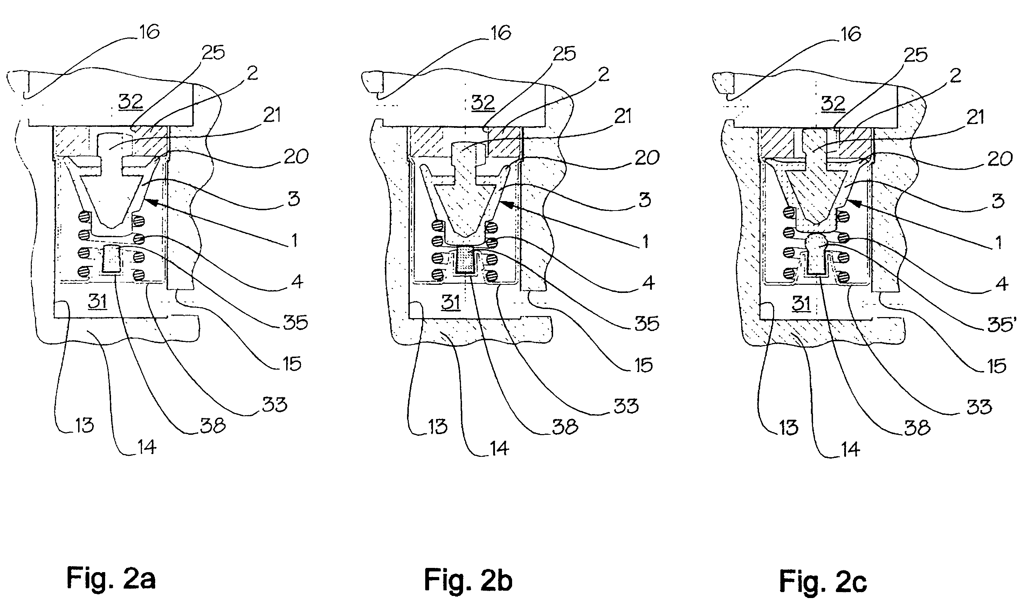

Konstruktive Einzelheiten des im Hydraulikschaltplan symbolisch dargestellten Rückschlagventils 5 werden anhand dreier, in den Fig. 2a - 2c, 3a - 3c und 4a -4c dargestellter Ausführungsbeispiele beschrieben. Sämtliche Ausführungsbeispiele sind zunächst im trockenen und druckausgeglichenen Zustand (Fig. Xa), dann im geöffneten Zustand während der Evakuierung (Fig. Xb) und schließlich nach der Befüllung mit Bremsflüssigkeit, also im betriebsbereiten Zustand der Bremsanlage (Fig. Xc) wiedergegeben.
Das in den Fig. 2a,2b,2c wiedergegebene Ausführungsbeispiel zeigt jeweils das Ventil 5 in den zuvor erläuterten Funktionszuständen. Das eigentliche Ventil ist in einer Sacklochbohrung 13 eines Aufnahmekörpers 14 angeordnet, der sowohl in Patronenbauweise als auch als separat in einem Ventilblock befestigtes Einsatzteil ausgeführt sein kann. Es könnte aber auch unmittelbar im Aufnahmekörper eines der Auslaßventile 10 eingesetzt werden. Das Ventil 5 weist einen Ventilschließkörper 1 auf, der wiederum aus einem elastomeren Dichtkörper 3 und einem vorzugsweise metallischen Führungskörper 21 zusammengesetzt ist. Der Führungskörper 21 ragt mit seinem einen Ende in einen in einem Ventilsitzkörper 2 eingelassenen Ventildurchgang 25 hinein. Das andere Ende ist von dem elastomeren Dichtkörper 3 umhüllt. Als eigentliches Dichtelement weist der elastomere Dichtkörper 3 einen umlaufenden Wulst oder eine Lippe 20 auf. Unter Wirkung der Feder 4 liegt der topfförmige, elastomere Dichtkörper 3 mit seinem Wulst 20 an einer scheibenförmigen Dichtfläche des Ventilsitzkörpers 2 an. Der Ventilsitzkörper 2 ist in eine durchlässige, topfartige Montagehülse 33 verstemmt und schließt diese nach oben hin ab, so daß der Ventilschließkörper 1 von der am Boden der Montagehülse 33 abgestützten Feder 4 im druckausgeglichenen und trockenen Auslieferungszustand stets in Schließstellung verharrt. In ihrem Bodenbereich bildet die Montagehülse 33 eine Aufnahmekammer 38 für die aus einem Quellkörpermaterial gefertigte Zusatzeinrichtung 35.

Die so gebildete Baueinheit aus Montagehülse 33, Ventilsitzkörper 2, Ventilschließkörper 1, Ventilfeder 4 und Zusatzeinrichtung 35 kann beispielsweise an anderer Stelle fertig montiert und zur Bremsenmontage ausgeliefert werden. Zu diesem Zwecke wird sie komplett in die stufig ausgeführte Sacklochbohrung 13 des Aufnahmekörpers 14 eingeführt und mit ihrem im oberen, aufgeweiteten Bereich verstemmt.

Schließlich weist der Aufnahmeköper 14 oberhalb des Ventilsitzkörpers 2 einen Hohlraum bzw. eine Kammer 32 auf, in die eine das Ventil 5 mit dem Sekundärkreis verbindende Querbohrung 16 führt. Unterhalb der Montagehülse 33 ist in analoger Weise eine Kammer 31 angeordnet, in die ein zum Primärkreis führender Querkanal 15 einmündet.

Der mittels elektrisch und hydraulisch schaltbarer und im Auslieferungszustand der Bremsanlage stromlos geschlossenen Ventile abgetrennte Sekundärkreis ist somit bei geschlossenem Ventil 5 als isolierter Bereich im Hydrauliksystem anzusehen.

Bei dem in Fig. 2b dargestellten Evakuierungsvorgang wird in der unteren Kammer 31, die unmittelbar mit dem Primärkreis verbunden ist, ein Unterdruck erzeugt, der bewirkt, daß der Ventilschließkörper 1 vom Ventilsitzkörper 2 abhebt, so daß auch in der oberen Kammer 32, die mit dem Sekundärkreis verbunden ist, ein Unterdruck entsteht. Damit der Ventilschließkörper 1 abheben kann, muß zunächst der von der Ventilfeder 4 bewirkte Öffnungsdruck überwunden werden, so daß für eine vollständige Evakuierung des Sekundärkreises eine schwache Befederung gewählt werden sollte. Sobald unter dieser Voraussetzung in Primär- und Sekundärkreis annähernd gleiche Unterdruckverhältnisse hergestellt sind, schließt das Ventil 5 von selbst, so daß beim Befüllen der Bremsanlage zunächst nur der Primärkreis betroffen ist.

Dabei wird das Vakuum im Primärkreis vom einströmenden Bremsmittelfluid verdrängt, so daß der infolge der schwachen Befederung zunächst nur leicht an den Ventilsitzkörper 2 gepreßte Schließkörper 1 infolge der entstehenden Druckdifferenz zwischen Primär- und Sekundärkreis unter Abspreizung der Dichtlippe 20 näher an den Ventilsitzkörper herangepreßt wird (Fig. 2c). Gleichzeitig wird der Quellkörper 35 aus Synthese-Kautschuk mit durch die durchlässige und hierzu beispielsweise mit einem feinen Lochraster versehene Montagehülse 33 einströmendem Bremsmittelfluid benetzt und volumenvergrößert, wobei der Schließkörper 1 durch den Quellkörper 35 nach Beendigung des Quellvorgangs dicht geschlossen und von dem volumenvergrößerten Quellkörper 35', wie in Fig. 2c ersichtlich, sicher abgestützt ist.

Anordnung, Größe und Material des Quellkörpers können dabei so aufeinander abgestimmt werden, daß der Öffnungsdruck des Ventils 5 nach dem Quellvorgang so stark erhöht ist, daß auf diese Weise eine Dauerschließfunktion des Ventils 5 erzielbar ist.

Anders als bei der eingangs angesprochenen Lösung gemäß der deutschen Patentanmeldung (DPA-Anmeldenummer: 19632158.1.6 vom 9.8.96) lasten auf der Oberfläche des Quellkörpers immer nur die jeweiligen Drücke des Primärkreises, so daß Deformationsschädigungen nicht zu erwarten sind. Wenn infolge von Alterung oder dergleichen trotzdem Schäden am Quellkörper auftreten sollten, so gewährleistet die vorhandene Ventilfeder 4 zumindest eine eingeschränkte Abdichtung zwischen Primär- und Sekundärkreis.

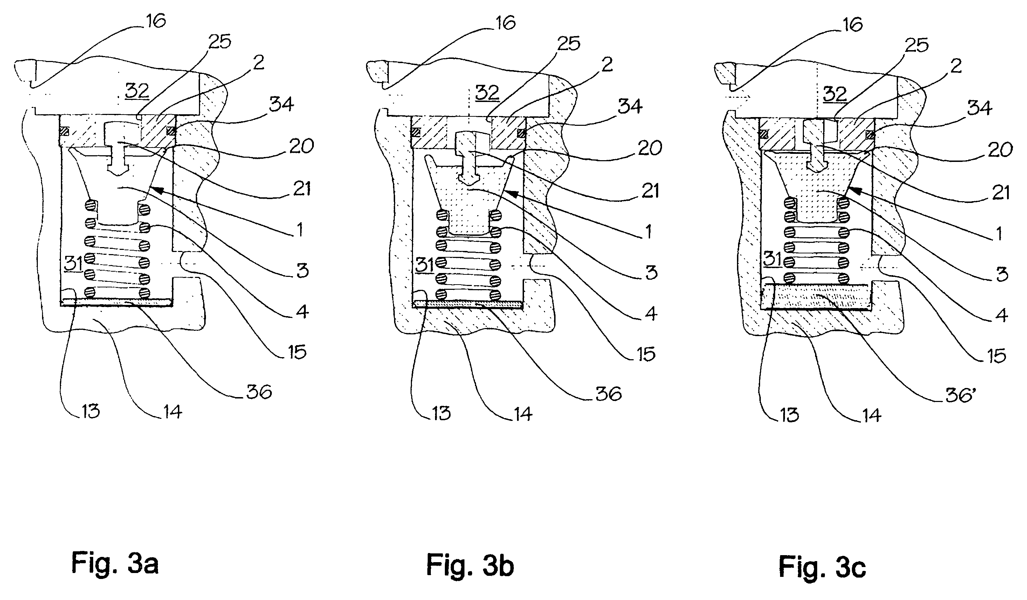

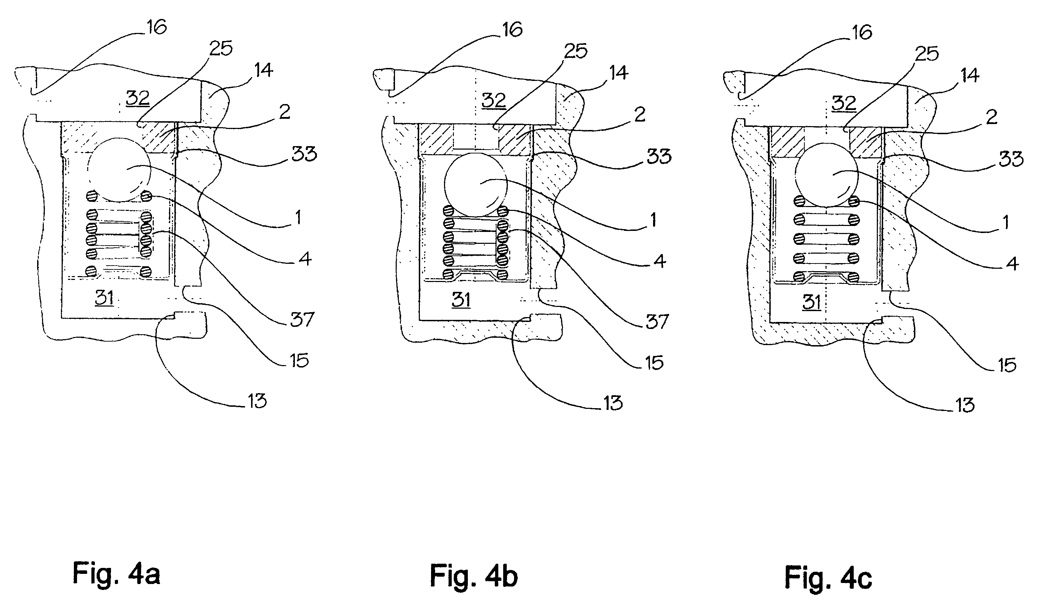

Bei den beiden folgenden und in den Fig. 3a bis 3c bzw. 4a bis 4c wiedergegebenen Ausführungsbeispielen sollen zur Vermeidung von Wiederholungen lediglich die Unterschiede zum bereits beschriebenen Ausführungsbeispiel angesprochen werden. Ansonsten wird auf die obige Textbeschreibung zu den Fig. 2a bis 2c verwiesen.

Bei dem in den Fig. 3a bis 3c gezeigten Ventil 5 wurde auf eine Montagehülse verzichtet. Statt dessen sind die wiederum aus einem Quellkörperelement bestehende Zusatzeinrichtung 36, 36', die Ventilfeder 4 sowie der Schließkörper 1 unmittelbar in die Sacklochbohrung 13 eingesetzt und mit Hilfe des Ventilsitzkörpers 2 verspannt und fixiert. Zur zusätzlichen Abdichtung dient ein innerhalb einer Ringnut verlaufender Dichtring 34. Der funktionelle Unterschied zum vorigen Ausführungsbeispiel besteht jedoch darin, daß die Ventilfeder mit ihrem einen Ende am Quellkörperelement 36 abgestützt ist. Auf diese Weise wird nach erfolgter Volumenvergrößerung des Quellkörpers 36' die Funktion der Ventilfeder 4 anstelle ihrer Überlagerung bzw.

Eliminierung lediglich modifiziert. Wie in Fig. 3c ersichtlich, ist mit der Volumenvergrößerung des Quellkörperelements 36' eine Verkürzung des Federwegs verbunden, wodurch gleichzeitig die Vorspannung der Ventilfeder 4 erhöht ist. Das Verhältnis zwischen Ventilöffnungsdruck im Trockenzustand und Ventilöffnungsdruck im Betriebszustand der Bremsanlage kann mit der gezeigten Bauform des Ventils sehr genau festgelegt werden.

Obgleich die Erfindung die bekannten Dichtlippenschließkörper auf die beschriebene und besonders vorteilhafte Weise ergänzt, soll darin keine Beschränkung gesehen werden, so daß das letzte, in den Fig. 4a bis 4c gezeigte Ausführungsbeispiel ein konventionelles Kugelsitzventil betrifft. Die gezeigte Zusatzeinrichtung 37 besteht im Unterschied zu den zuvor behandelten Quellkörpern aus einem sich unter Einfluß von Bremsmittelfluid auflösenden Material und ist als ein beispielsweise vier übereinanderliegende Windungen der Ventilfeder 4 zusammenpressendes Fesselelement 37 ausgebildet. Während der Befüllung der Kammer 31 mit Bremsflüssigkeit löst sich die Fessel auf und gibt auf diese Weise die gesamte Vorspannung der Ventilfeder 4 frei. Anstelle des gezeigten Fesselelements 37 sind selbstverständlich auch seitlich an der Montagehülse 33 oder direkt am Gehäuse 14 angeordnete und aus einem entsprechenden Material gefertigte Verriegelungselemente denkbar, die die Ventilfeder 4 zusammenpressen und unter Einfluß von Bremsflüssigkeit oder auch bei Erzielung eines definierten Unterdrucks (bei gleichzeitiger Erhöhung des Öffnungsdruckes) freigeben.

### Bezugszeichenliste

- 1: Ventilschließkörper
- 2: Ventilsitzkörper
- 3: Dichtkörper
- 4: Ventilfeder
- 5: Ventil
- 6: Saugpfad
- 7: Pumpe
- 8: Radbremsen
- 9: Bremsdruckpfad
- 10: Auslaßventile
- 11: Einlaßventile
- 12: Bremsdruckgeber
- 13: Sacklochbohrung
- 14: Aufnahmekörper
- 15: Kanal, Bohrung (primär)
- 16: Kanal, Bohrung (sekundär)
- 18: Niederdruckspeicher
- 20: Wulst
- 25: Ventildurchgang
- 31: Kammer
- 32: Kammer
- 33: Montagehülse
- 34: Dichtring
- 35, 35': Quellkörperelement
- 36, 36': Quellkörperelement
- 37: Fesselelement
- 38: Aufnahmekammer

## Patentansprüche

1. Hydraulische Fahrzeugbremsanlage mit Radschlupfregelung, die einen Primär- und Sekundärkreis aufweist, mit einem zwischen dem Primär- und Sekundärkreis angeordneten Ventil (5), das einen Ventilsitzkörper (2) und einen Federbeaufschlagten Ventilschließkörper (1) aufweist, **dadurch gekennzeichnet, daß** eine Zusatzeinrichtung (35, 35'; 36, 36'; 37) vorgesehen ist, mittels derer nach der Befüllung der Bremsanlage mit Bremsmittelfluid der für eine Offenschaltung zu überwindende Vordruck des von einer Feder (4) beaufschlagten Ventilschließkörpers (1) wenigstens so weit selbsttätig erhöht ist, daß der Ventilschließkörper (1) zumindest im radschlupffreien Betrieb der Bremsanlage in Schließstellung verbleibt.

2. Hydraulische Fahrzeugbremsanlage nach Anspruch 1, **dadurch gekennzeichnet, daß** die Zusatzeinrichtung ein oder mehrere, unter der Einwirkung von Bremsmittelfluid sich auflösende oder eine Form- und/oder Volumenänderung vollziehende Elemente (35, 35'; 36, 36'; 37) umfaßt.

3. Hydraulische Fahrzeugbremsanlage nach Anspruch 2, **dadurch gekennzeichnet, daß** das oder die Elemente (35, 35'; 36, 36') aus einem sich unter Einfluß von Bremsmittelfluid ausdehnendem Quellwerkstoff, vorzugsweise einem Öl- und Benzinbeständigen Synthesekautschuk bestehen.

4. Hydraulische Fahrzeugbremsanlage nach Anspruch 3, **dadurch gekennzeichnet, daß** sich der Schließkörper (1), die Ventilfeder (4) sowie das Element (35, 35') innerhalb eines von einem Aufnahmekörper (14) und einem Ventilsitzkörper (2) gebildeten Hohlraumes (31) befinden und so zueinander angeordnet sind, daß der auf der Ventilfeder (4) abgestützte und dadurch axial im Hohlraum (31) bewegliche Ventilschließkörper (1) nach der Füllung des Hohlraums (31) mit Bremsmittelfluid an seiner vom Ventilsitzkörper (2) abgewandten Seite auch auf dem volumenvergrößerten Element (35') abgestützt ist und dadurch in Schließstellung gehalten wird.

5. Hydraulische Fahrzeugbremsanlage nach Anspruch 4, **dadurch gekennzeichnet, daß** das Quellwerkstoff-Element (35, 35') in einer zu einer Seite hin geöffneten Führungsbuchse (38) angeordnet ist.

6. Hydraulische Fahrzeugbremsanlage nach Anspruch 3, **dadurch gekennzeichnet, daß** die Ventilfeder (4) mit wenigstens einem Ende an einem Element (36, 36') abgestützt ist.

7. Hydraulische Fahrzeugbremsanlage nach Anspruch 2, **dadurch gekennzeichnet, daß** das oder die sich unter Einfluß von Bremsmittelfluid auflösenden Elemente (37) so ausgebildet sind, daß die Federkraft der Ventilfeder (4) wenigstens teilweise aufgehoben ist.

8. Hydraulische Fahrzeugbremsanlage nach Anspruch 6, **dadurch gekennzeichnet, daß** das Element (37) als wenigstens zwei benachbarte Windungen der Ventilfeder (4) umschließendes Fesselelement (37) ausgebildet ist.

9. Hydraulische Fahrzeugbremsanlage nach einem der vorhergehenden Ansprüche, **dadurch gekennzeichnet, daß** der Ventilschließkörper (1) mit einer elastisch nachgiebigen Dichtlippe (20) versehen ist und die Zusatzeinrichtung so abgestimmt ist, daß die Dichtlippe (20) nach Erhöhung des Vordrucks nahezu vollständig zusammengedrückt ist.

10. Hydraulische Fahrzeugbremsanlage nach einem der vorhergehenden Ansprüche, **dadurch gekennzeichnet, daß** die Zusatzeinrichtung, der Ventilschließkörper (1) und die Ventilfeder (4) in einer durchlässigen und im Aufnahmekörper (14) angeordneten Montagehülse (33) untergebracht sind, die in Schließrichtung vom Ventilsitzkörper (2) abgedeckt ist.

11. Hydraulische Fahrzeugbremsanlage nach einem der Ansprüche 1 bis 10, **dadurch gekennzeichnet, daß** das zwischen den beiden Kreisen angeordnete Ventil (5) als ein zum Primärkreis hin öffnendes Rückschlagventil (5) ausgebildet ist.

## Claims

1. Hydraulic vehicle brake system with wheel slip control, which comprises a primary and a secondary circuit, a valve (5) interposed between the primary and the secondary circuit and including a valve seat member (2) and a spring-applied valve closure member (1),
**characterized in that** there is provision of an additional device (35, 35'; 36, 36'; 37) which, after filling of the brake system with brake fluid, permits automatically increasing the pilot pressure of the valve closure member (1) acted upon by a spring (4), which pressure must be overcome to switch to the open position, at least to such an extent that the valve closure member (1) remains in the closing position at least during the wheel-slip free operation of the brake system.

2. Hydraulic vehicle brake system as claimed in claim 1,
**characterized in that** the additional device comprises one or a plurality of elements (35, 35'; 36, 36'; 37) which dissolve under the effect of brake fluid or undergo a change in shape and/or volume.

3. Hydraulic vehicle brake system as claimed in claim 2,
**characterized in that** the element(s) (35, 35'; 36, 36') is/are made of a swelling material, preferably an oil-resistant and fuel-resistant synthetic caoutchouc, which expands under the influence of brake fluid.

4. Hydraulic vehicle brake system as claimed in claim 3,
**characterized in that** the closure member (1), the valve spring (4), and the element (35, 35') are positioned inside a hollow chamber (31) provided by an accommodating member (14) and a valve seat member (2) and are arranged in relation to each other so that the valve closure member (1) which is supported on the valve spring (4) and, hence, is axially movable in the hollow chamber (31), on its side remote from the valve seat member (2) is also supported on the volume-expanded element (35') and is thereby maintained in the closing position after the hollow chamber (31) is filled with brake fluid.

5. Hydraulic vehicle brake system as claimed in claim 4,
**characterized in that** the element (35, 35') made of swelling material is arranged in a guide bushing (38) which is open to one side.

6. Hydraulic vehicle brake system as claimed in claim 3,
**characterized in that** the valve spring (4) with at least one end is supported on an element (36, 36').

7. Hydraulic vehicle brake system as claimed in claim 2,
**characterized in that** the element(s) (37) dissolving under the effect of brake fluid is/are so configured that the resilient force of the valve spring (4) is eliminated at least in part.

8. Hydraulic vehicle brake system as claimed in claim 6,
**characterized in that** the element (37) is configured as a captivating element (37) which encompasses at least two adjacent coils of the valve spring (4).

9. Hydraulic vehicle brake system as claimed in any one of the preceding claims,
**characterized in that** the valve closure member (1) has at least one elastically yielding sealing lip (20), and the additional device is so adapted that the sealing lip (20) is compressed almost completely after the increase of the pilot pressure.

10. Hydraulic vehicle brake system as claimed in any one of the preceding claims,
**characterized in that** the additional device, the valve closure member (1), and the valve spring (4) are accommodated in a pervious mounting sleeve (33) which is arranged in the accommodating member (14) and is covered by the valve seat member (2) in the closing direction.

11. Hydraulic vehicle brake system as claimed in any one of claims 1 to 10,
**characterized in that** the valve (5) which is arranged between the two circuits is configured as a a non-return valve (5) which opens towards the primary circuit.

## Revendications

1. Système de freinage hydraulique pour véhicule avec régulation anti-dérapage, qui présente un circuit primaire et un circuit secondaire, avec une soupape (5) agencée entre le circuit primaire et le circuit secondaire et qui présente un corps de siège de soupape (2) et un obturateur de soupape (1) sollicité par un ressort, **caractérisé en ce qu'**il est prévu un dispositif rapporté (35, 35'; 36, 36'; 37) au moyen duquel, après le remplissage du système de freinage par un liquide de frein, la pression préalable à surmonter pour une commutation d'ouverture de l'obturation de soupape (1) sollicité par un ressort (4) est élevée automatiquement au moins assez largement pour que l'obturateur de soupape (1) reste en position de fermeture au moins en exploitation sans action anti-patinage du système de freinage.

2. Système de freinage hydraulique pour véhicule selon la revendication 1, **caractérisé en ce que** le dispositif rapporté comprend un ou plusieurs éléments (35, 35'; 36, 36'; 37) se désagrégeant ou effectuant une variation de forme et/ou de volume sous l'influence du liquide de frein.

3. Système de freinage hydraulique pour véhicule selon la revendication 2, **caractérisé en ce que** le ou les éléments (35, 35'; 36, 36') sont constitués d'un matériau gonflant se dilatant sous l'influence du liquide de frein, de préférence un caoutchouc de synthèse résistant aux huiles et à l'essence.

4. Système de freinage hydraulique pour véhicule selon la revendication 3, **caractérisé en ce que** l'obturateur (1), le ressort de soupape (4) ainsi que l'élément (35, 35') se trouvent dans un espace creux formé par un corps récepteur (14) et un corps de siège de soupape (2) et sont agencés l'un par rapport à l'autre de telle sorte que l'obturateur de soupape (1) s'appuyant sur le ressort de soupape (4) et de la sorte déplaçable axialement dans l'espace creux (31) soit pressé, après remplissage de l'espace creux (31) par le liquide de frein sur son côté opposé au corps de siège de soupape (2), également sur l'élément à volume accru (35') et soit ainsi maintenu en position de fermeture.

5. Système de freinage hydraulique pour véhicule selon la revendication 4, **caractérisé en ce que** l'élément de matériau gonflant (35, 35') est agencé dans une douille de guidage (38) ouverte vers un côté.

6. Système de freinage hydraulique pour véhicule selon la revendication 3, **caractérisé en ce que** le ressort de soupape (4) est pressé par au moins une extrémité sur un élément (36, 36').

7. Système de freinage hydraulique pour véhicule selon la revendication 2, **caractérisé en ce que** le ou les éléments (37) se désagrégeant sous l'influence du liquide de frein est ou sont conformés de telle sorte que la force du ressort de soupape (4) soit surmontée au moins partiellement.

8. Système de freinage hydraulique pour véhicule selon la revendication 6, **caractérisé en ce que** l'élément (37) se présente sous la forme d'un élément captif (37) entourant au moins deux spires voisines du ressort de soupape (4).

9. Système de freinage hydraulique pour véhicule selon l'une quelconque des revendications précédentes, **caractérisé en ce que** l'obturateur de soupape (1) est pourvu d'une lèvre d'étanchéité souple élastique (20) et le dispositif rapporté est ajusté de telle sorte que la lèvre d'étanchéité (20) soit pressée presque complètement après augmentation de la pression préalable.

10. Système de freinage hydraulique pour véhicule selon l'une quelconque des revendications précédentes, **caractérisé en ce que** le dispositif rapporté, l'obturateur de soupape (20) et le ressort de soupape (4) sont logés dans une douille de montage perméable (33) agencée dans le corps récepteur (14), qui est recouverte par le corps de siège de soupape (2) dans la direction de fermeture.

11. Système de freinage hydraulique pour véhicule selon l'une quelconque des revendications 1 à 10, **caractérisé en ce que** la soupape (5) agencée entre les deux circuits se présente sous la forme d'une soupape anti-retour (5) s'ouvrant vers le circuit primaire.
